# EUROPEAN PATENT APPLICATION

(11) **EP 4 246 016 A1**
(43) Date of publication of application: **20.09.2023**
(21) Application number: 22162508.0
(22) Date of filing: 16.03.2022
(51) Int. Cl.: F16H 57/02

(54) **GEARBOX WITH IMPROVED ALIGNMENT OF HOUSING PARTS**

(71) Applicant: Valeo eAutomotive Germany GmbH, 91056 Erlangen (DE)
(72) Inventor: Husch, Julia, 91056 Erlangen (DE); Kolbe, Stephan, 91056 Erlangen (DE); Kessler, Niels, 91056 Erlangen (DE); Haas, Bernd, 91056 Erlangen (DE)
(74) Representative: Valeo Powertrain Systems

(57) **Abstract**

A gearbox (1, 1a) is disclosed, which comprises a housing (2a, 2b) with at least two interconnected housing parts (3a..3q, 4a, 4b), a plurality of bearings (5, 6) arranged in said housing (2a, 2b), a plurality of shafts (7) supported in said bearings (5, 6) and a plurality of engaged gear wheels (8, 9) mounted on or being part of said shafts (7). Aligning of the housing parts (3a..3q, 4a, 4b) is done by a plurality of pairwise mating flat or curved surfaces (M1, M2), wherein a first surface (M1) of the surfaces (M1, M2) of each matching pair (P) is arranged on or in the first housing part (3a..3q) and a second surface (M2) of the surfaces (M1, M2) of each matching pair (P) is arranged on or in the second housing part (4a, 4b). In addition, a drive system (14) is disclosed, which comprises a gearbox (1, 1a) of the above kind and an electric machine (15) coupled to a gear input of said gearbox (1, 1a). Finally, a vehicle (13) with said drive system (14) is disclosed.

## Description

### TECHNICAL FIELD

The invention relates to a gearbox, which comprises a housing with at least a first and a second interconnected housing parts, a plurality of bearings arranged in said housing, a plurality of shafts supported in said bearings and a plurality of engaged gear wheels mounted on or being part of said shafts. Furthermore, the invention relates to a drive system, which comprises a gearbox of the above kind and an electric machine coupled to a gear input of said gearbox. Finally, the invention relates to a vehicle with at least two axles, at least one of which is driven, wherein said drive is provided at least partially or intermittently by the drive system of the aforementioned kind.

### BACKGROUND ART

Usually, a gearbox has a multipart housing, so that it can be assembled. For a satisfying function of the gearbox, the housing parts, which usually carry the bearings for the gear shafts, have to be aligned properly. Otherwise, the gear wheels do not engage in the intended way what causes excessive noise and wear. Various systems have been proposed for alignment of gearbox housing parts. For example, EP 3 597 462 A1 discloses rather complex shapes for aligning gearbox housing parts. Accordingly, a solution is missing, which allows alignment of gearbox housing parts with technically simple means, which are easy to produce.

### DISCLOSURE OF INVENTION

An object of the invention is to provide an improved gearbox, an improved drive system and an improved electric vehicle. In particular, a solution shall be proposed, which allows alignment of gearbox housing parts with technically simple means, which are easy to produce.

The object of the invention is solved by a gearbox as defined in the opening paragraph, wherein the first and the second housing part are aligned to each other by means of a plurality of pairwise mating surfaces forming matching pairs, wherein a first surface of the surfaces of each matching pair is arranged on or in the first housing part and a second surface of the surfaces of each matching pair is arranged on or in the second housing part and wherein the mating surfaces of a matching pair are flat or curved.

Further on, the object of the invention is solved by a drive system, comprising a gearbox of the above kind and an electric machine coupled to a gear input of the gearbox.

Finally, the object of the invention is solved by a vehicle, which has at least two axles, at least one of which is driven, wherein said drive is provided at least partially or intermittently by the above drive system.

The proposed measures allow alignment of gearbox housing parts with technically simple means, which are easy to produce. So, excessive noise and wear can be avoided at low costs. Instead, the proposed gearboxes operate quietly and have a long lifetime.

Generally, curved mating surfaces in particular may have the shape of a cylinder segment or more strictly speaking may be shaped like a part of a cylinder barrel. The term "cylinder" is meant as a "general cylinder" here, which may have bottom and top surfaces of any shape. In particular, the term "cylinder" refers to oval, elliptical or circular cylinders, and in particular mating surfaces may be shaped like a part of an oval cylinder barrel, like a part of an elliptical cylinder barrel or like a part of a circular cylinder barrel.

Further advantageous embodiments are disclosed in the claims and in the description as well as in the figures.

Beneficially, each of the shafts is supported by at least two bearings, wherein a first bearing of said bearings of each shaft is arranged in the first housing part and a second bearing of said bearings of each shaft is arranged in the second housing part. By the proposed alignment of the housing parts, proper alignment of the shafts and the gear wheels mounted thereon or being part thereof can be achieved as well. In particular, the matching pairs for the alignment surround the shafts for this reason. Shafts are not necessarily one-piece. For example it can be that the shaft has two pieces, wherein a first shaft part is supported by a bearing in the first housing part and a second shaft part is supported by a bearing in the second housing part.

Beneficially, the surfaces of at least one matching pair (in particular of all matching pairs) are oriented perpendicularly to a separating plane of the housing, which is arranged between the first and the second housing part. In this way, the first and the second housing part can easily be connected to each other.

Advantageously, the gearbox comprises at least four matching pairs with flat mating surfaces, wherein the mating surfaces of a first and a second of the matching pairs are arranged transversely (in particular perpendicularly) to the mating surfaces of a third and a fourth of the matching pairs. In particular, the mating surfaces of the first and the second matching pairs are parallel to each other, and the mating surfaces of the third and the fourth matching pairs are parallel to each other. In this way, proper alignment of the housing parts can be achieved for all six degrees of freedom (provided the housing parts are held together in the mounting direction by proper means, e.g. by bolts).

Furthermore it is of advantage, if the gearbox comprises at least two matching pairs with curved mating surfaces. In this way, proper alignment of the housing parts can be achieved for all six degrees of freedom as well.

In yet another advantageous embodiment, the gearbox comprises at least one matching pair with curved mating surfaces and at least one matching pair with flat mating surfaces. In particular, the gearbox can comprise at least one matching pair with curved mating surfaces and at least two matching pairs with flat mating surfaces, wherein the flat mating surfaces of a first of the matching pairs are arranged transversely (in particular perpendicularly) to the mating surfaces of a second of the matching pairs. This is yet another way for proper alignment of the housing in all six degrees of freedom.

Beneficially, the mating surfaces of all matching pairs are flat. In this way, the mating surfaces can be fabricated with low effort, e.g. by milling.

In another beneficial embodiment of the gearbox, the mating surfaces of all matching pairs are curved. In this way, a single matching pair can align the housing parts in more than one degree of freedom.

Advantageously, the first housing part and/or the second housing part can comprise at least one tab, which reaches over a separating plane of the housing and which comprises a first surface of a matching pair. In particular, the first housing part and/or the second housing part may comprise a plurality of tabs, which each reaches over a separating plane of the housing and which each comprises a first surface of a matching pair. By these means, the housing parts can be aligned with low technical effort.

Generally, the mating surfaces of at least one matching pair (in particular of all matching pairs) can be arranged inside of the housing or outside of the housing. If the mating surfaces are arranged inside of the housing, the same are protected well from unfavorable environmental conditions like humid air causing rust formation. If they are arranged outside of the housing, correct alignment of the housing parts can easily be checked.

In yet another beneficial embodiment, the first and the second housing part are polygonal in a separating plane of the housing and at least one matching pair is located in a corner of the polygon or in a region of a corner of the polygon (in particular all matching pairs are located in or in a region of corners of the polygon). In this way, alignment of the housing parts in all degrees of freedom can be achieved easily. The term "polygonal" in this context is not limited to shapes with sharp corners but includes polygons with rounded corners as well. Anyway, the first and the second housing part may also have other shapes in the separating plane. For example, the first and the second housing part in a separating plane of the housing may be oval, elliptical, circular or may have a general shape.

Finally, it is of advantage, if one of the housing parts forms a housing of the electric machine or is coupled thereto. In this way, proper alignment with a motor shaft can be achieved as well by use of the proposed measures. If one of the housing parts forms a housing of the electric machine, this part moreover provides a double function.

### BRIEF DESCRIPTION OF DRAWINGS

The invention now is described in more detail hereinafter with reference to particular embodiments, which the invention however is not limited to.
- Fig. 1: shows a sectional view of an exemplary and schematically drawn gear-box;
- Fig. 2: shows an oblique view of an exemplary gearbox housing with disassembled housing parts;
- Fig. 3: like Fig. 2 shows an example with six tabs and twelve mating surfaces;
- Fig. 4: like Fig. 3, but with mating surfaces inside of the housing;
- Fig. 5: like Fig. 3, but with the outer right tab being moved to the left inside of the first housing part;
- Fig. 6: like Fig. 5, wherein the tabs on the longer sides of the polygonal (rectangular) first connection surface moved from the outside to the inside;
- Fig. 7: like Fig. 3, but with just one tab on each side of the polygonal (rectangular) first connection surface;
- Fig. 8: shows an example with four tabs with eight mating surfaces;
- Fig. 9: like Fig. 8, wherein the tabs on the longer sides of the polygonal (rectangular) first connection surface moved from the inside to the outside;
- Fig. 10: shows an example with tabs being located in a region of a corner of a polygonal (rectangular) first connection surface;
- Fig. 11: shows an example with tabs being pairwise arranged inside and outside of the first housing part;
- Fig. 12: shows an example with a first connection surface having parts separated from each other;
- Fig. 13: shows an example with tabs of different size;
- Fig. 14: shows an example with eight tabs and sixteen mating surfaces;
- Fig. 15: shows an example with curved mating surfaces;
- Fig. 16: shows an example with a square-shaped first connection surface;
- Fig. 17: shows an example with a first connection surface having a general shape and
- Fig. 18: shows a schematic view of an electric vehicle with a gearbox of the disclosed kind;

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure.

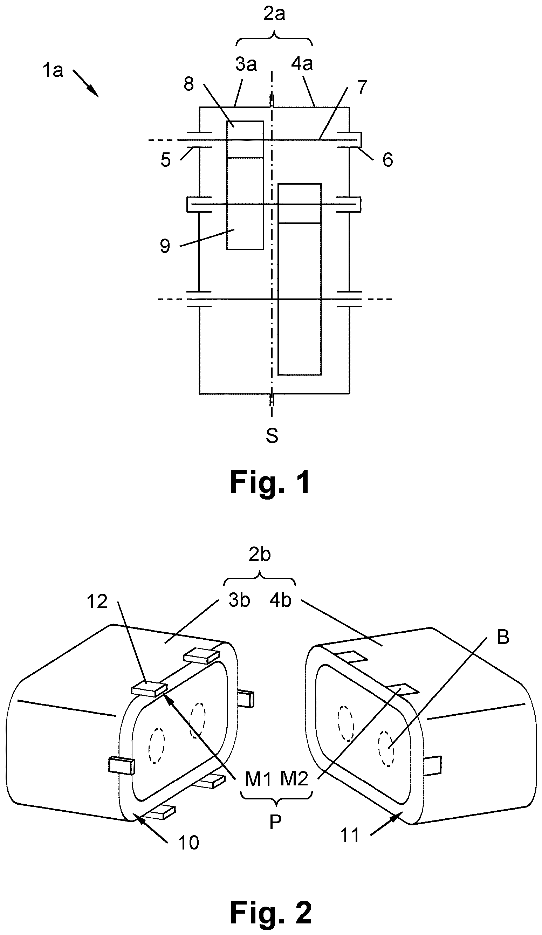

Fig. 1 shows a sectional view of an exemplary and schematically drawn gearbox 1a. The gearbox 1a has a housing 2a, comprising a first housing part 3a and a second housing part 4a, which are connected to each other, for example by means of bolts (not shown). Moreover, the gearbox 1a comprises a plurality of bearings 5, 6 arranged in said housing 2a, a plurality of shafts 7 supported in said bearings 5, 6 and a plurality of engaged gear wheels 8, 9 mounted on or being part of said shafts 7. In the example of Fig. 1, in detail, the gear wheel 8 is mounted on or is part of the shaft 7, which is supported by the bearings 5, 6 and which forms the gear input in this example. The gear wheel 9 is mounted on a further shaft, which is not explicitly denoted with reference signs, and supported with further bearings, which are not explicitly denoted with reference signs either. In addition to the first gear stage, which is formed by the gear wheels 8, 9, the gearbox 1a comprises a second gear stage coupled to the gear output. In addition, Fig. 1 shows a separating plane S between the first housing part 3a and the second housing part 4a.

In the example of Fig. 1 each of the shafts 7 is supported by two bearings 5, 6, wherein a first bearing 5 of said bearings 5, 6 of each shaft 7 is arranged in the first housing part 3a and a second bearing 6 of said bearings 5, 6 of each shaft 7 is arranged in the second housing part 4a. In this example, two bearings 5, 6 are provided for each shaft 7. However, more bearings 5, 6 can be provided to support a shaft 7 as well. Furthermore it is noted that shafts 7 are not necessarily one-piece. For example it can be that the shaft 7 has two pieces, wherein a first shaft part is supported by the bearing 5 in the first housing part 3a and a second shaft part is supported by the bearing 6 in the second housing part 4a.

Fig. 2 shows an oblique view of a gearbox housing 2b, comprising a first housing part 3b and a second housing part 4b, which are prepared to be connected to each other. The first housing part 3b has a first connection surface 10, and the second housing part 4b has a second connection surface 11, which in the mounted state of the housing 2a contact each other, with an optional sealing in-between as the case may be. In the mounted state, the first connection surface 10 and the second connection surface 11 lay in the separating plane S (or closely to the same if a sealing is provided between the first housing part 3b and the second housing part 4b).

The first and the second housing part 3b, 4b are aligned to each other by means of a plurality of pairwise mating surfaces M1, M2 forming matching pairs P, wherein a first surface M1 of the surfaces M1, M2 of each matching pair P is arranged on or in the first housing part 3a and a second surface M2 of the surfaces M1, M2 of each matching pair P is arranged on or in the second housing part 4a.

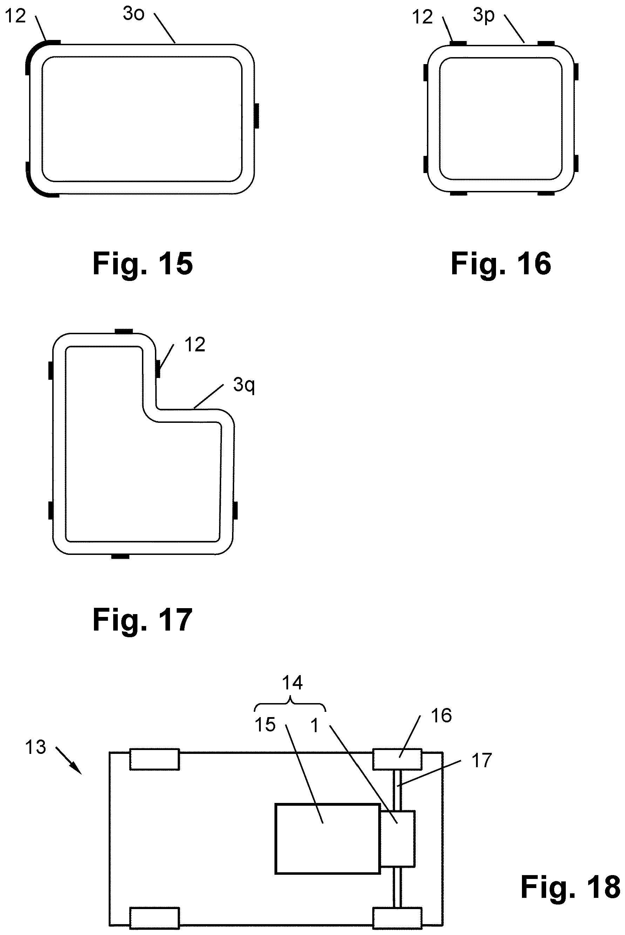

In the example of Fig. 2, for this reason, the first housing part 3b comprises a plurality of tabs 12, which each reaches over the separating plane S of the housing 2b and which each comprises a first surface M1 of a matching pair P. In detail, the first surfaces M1 of the tabs 12 face inwards and cooperate with the second surfaces M2, which are arranged on the second housing part 4b and face outwards. In the example shown in Fig. 2, the mating surfaces M1, M2 of a matching pair P are flat. In fact, in this example, all mating surfaces M1, M2 of all matching pairs P are flat. However, mating surfaces M1, M2 may be curved or may have mixed shapes as well as the case may be (see Fig. 15).

Fig. 2 furthermore shows later positions B of the shafts 7, which are not yet mounted in the state shown in Fig. 2.

The example shown in Fig. 2 has some further optional characteristics:
- The surfaces M1, M2 of at least one matching pair P, and in this example even of all matching pairs P, are oriented perpendicularly to the separating plane S (or to the contact surfaces 10, 11) of the housing 2b. In this way, the first and the second housing part 3b, 4b can easily connected to each other.
- The mating surfaces M1, M2 of at least one matching pair P, and in the given example even of all matching pairs P, are arranged outside of the housing 2b. In this way, proper alignment of the housing parts 3b, 4b can easily be checked, particularly during assembly.
- There are at least four (in this example even six) matching pairs P with flat mating surfaces M1, M2, wherein the mating surfaces M1, M2 of a first and a second of the matching pairs P are arranged transversely (in particular perpendicularly) to the mating surfaces M1, M2 of a third to sixths of the matching pairs P. In particular, the mating surfaces M1, M2 of the first and the second matching pairs P are parallel to each other, and the mating surfaces M1, M2 of the third to sixths matching pairs P are parallel to each other. In this way, the first and the second housing part 3b, 4b are aligned to each other in all six degrees of freedom (provided the housing parts 3b, 4b are held together in the mounting direction by proper means, e.g. by bolts).
- The matching pairs P surround the shafts 7 for a proper alignment of both the shafts 7 and its bearings 5, 6.

It should be noted that although the tabs 12 are exclusively arranged on the first housing part 3b in Fig. 2, embodiments, where the tabs 12 are exclusively arranged on the second housing part 4b, and embodiments with a mixed tab arrangement and thus with tabs 12 on both the first housing part 3b and the second housing part 4b are possible as well. For example, some of the tabs 12 shown in Fig. 2 may move to the second housing part 4b, and hence the respective mating surfaces M1, M2 may be swapped in an alternative embodiment.

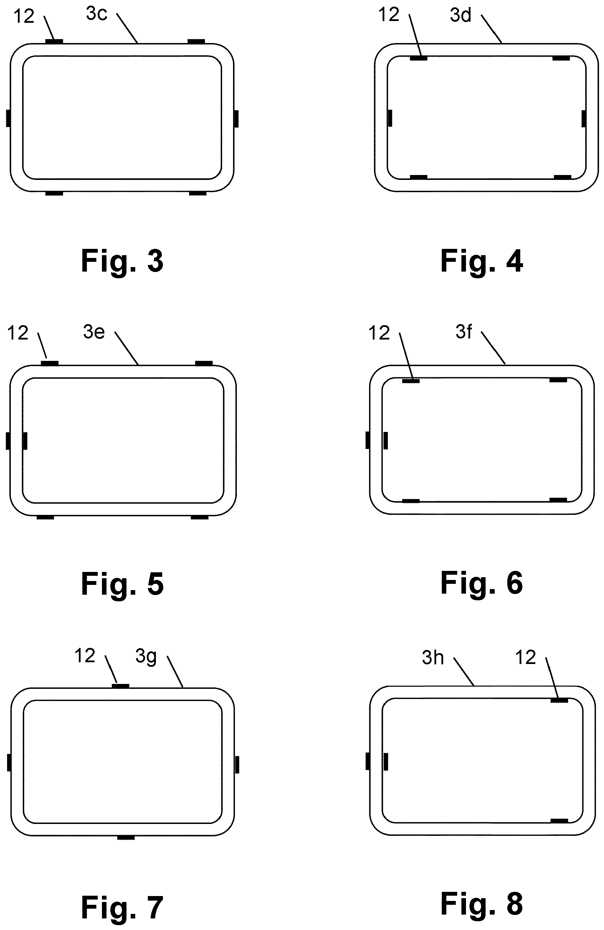

Figs. 3 to 17 now show various embodiments of how the first and the second housing part 3a..4b can be aligned to each other. In detail, the examples show top views onto first housing parts 3c..3q or first connection surfaces 10, wherein the matching pairs P respectively the tabs 12 are depicted as black and filled squares. Figs. 3 to 17 also cover cases, in which some or all of the tabs 12 are arranged on the second housing part 4b. In such cases, Figs. 3 to 17 can be seen as cross sectional views in the separating plane S. Accordingly, those tabs 12 on the second housing part 4b then are shown cut in Figs. 3 to 17.

Fig. 3 represents the configuration shown in Fig. 2. Again, there are six tabs 12 and twelve mating surfaces M1, M2. The example shown in Fig. 4 is very similar to that one shown in Fig. 3. Again, there are six tabs, but now the mating surfaces M1, M2 are arranged inside of the housing 2a. 2b. In this way, the mating surfaces M1, M2 are well protected from unfavorable environmental conditions like humid air causing rust formation. However, the alignment function is pretty the same as for the example shown in Fig. 3.

The example of Fig. 5 is similar to that one of Fig. 3, but in contrast the outer right tab 12 moved to the left inside of the first housing part 3e. Fig. 6 shows an example, which is very similar to that one shown in Fig. 5, but here the tabs 12 on the longer sides of the polygonal (rectangular) first connection surface 10 moved from the outside to the inside. Again, alignment function of the examples shown in Figs. 5 and 6 is pretty the same as for the examples shown in Figs. 3 and 4.

Fig. 7 shows another example, which is similar to the one of Fig. 3. In contrast, in Fig. 7 there is just one tab 12 on each side of the polygonal (rectangular) first connection surface 10.

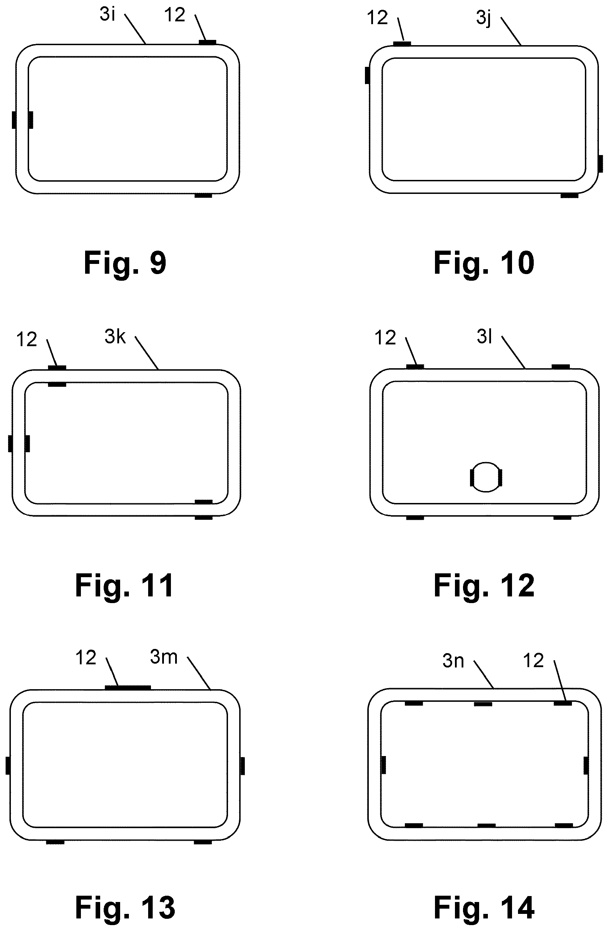

The example of Fig. 8 like the example of Fig. 7 comprises four tabs 12 with eight mating surfaces M1, M2. In addition, the example of Fig. 8 is similar to the one of Fig. 6, but in Fig. 8 there is just one tab 12 on each of the longer sides of the polygonal (rectangular) first connection surface 10. The example of Fig. 9 is similar to the one of Fig. 8. In contrast, here the tabs 12 on the longer sides of the polygonal (rectangular) first connection surface 10 moved from the inside to the outside. Fig. 10 shows another example with four tabs 12 and eight mating surfaces M1, M2. Here, the tabs 12 are located in a region of a corner of the polygonal (rectangular) first connection surface 10.

Fig. 11 shows another example with six tabs 12 and twelve mating surfaces M1, M2. Here the tabs 12 are pairwise arranged inside and outside of the first housing part 3k.

Fig. 12 shows an example which shall illustrate that the first connection surface 10 is not necessarily a continuous surface but may be comprise parts being separated from each other. Some of the mating surfaces M1, M2 are arranged on the outer part of the first connection surface 10, some are arranged around the center part of the connection surface 10 in this example. The center part of the connection surface 10 is circular in this case. Nonetheless, other shapes are possible as well like other curved shapes like ovals or even polygonal shapes.

Fig. 13 shows an example, which shall illustrate that the tabs 12 do not necessarily have the same size. Here, the upper tab 12 is broader than the other ones.

Fig. 14 shows an example with eight tabs 12 and sixteen mating surfaces M1, M2. Fig. 15 shows an example, which shall illustrate that the mating surfaces M1, M2 of a matching pair P are not necessarily flat but may also be curved. In this example, there are two tabs 12 and two matching pairs P with curved mating surfaces M1, M2. In addition, there is a further tab 12 with flat mating surfaces M1, M2. Such a configuration provides alignment of the housing parts 3a4b in all six degrees of freedom as well. However, in this context one should note that for providing this function it is also possible that there are one matching pair P with curved mating surfaces M1, M2 and two matching pairs P with flat mating surfaces, wherein the flat mating surfaces M1, M2 of a first of the matching pairs P are arranged transversely (in particular perpendicularly) to the mating surfaces M1, M2 of a second of the matching pairs P. In yet another embodiment, it may also be the case that the mating surfaces M1, M2 of all matching pairs P are curved.

Curved mating surfaces M1, M2 in particular may have the shape of a cylinder segment or more strictly speaking may be shaped like a part of a cylinder barrel. Here, the mating surfaces M1, M2 are shaped like a part of a circular cylinder barrel. However, they may also have the shape of a part of an oval cylinder barrel or elliptical cylinder barrel or may have a general cylindrical shape.

Fig. 16 shows an example to illustrate that the first connection surface 10 is not necessarily rectangular but may be square-shaped as well.

Finally, Fig. 17 shows an example with a first connection surface 10 having a general shape.

Generally, one should note, that although, Figs 1 to 16 depict polygonal first connection surfaces 10 with four corners, polygons with a different number of corners are applicable as well. It should also be noted that the term "polygonal" in this context is not limited to shapes with sharp corners but includes polygons with rounded corners, like this is the case for the examples shown in Figs. 1 to 16. Furthermore, the first and the second housing part 3a4b may also have other shapes in the separating plane S. For example, the first and the second housing part 3a..4b in the separating plane S of the housing 2a, 2b may be oval, elliptical, circular or may have a general shape.

Fig. 18 finally shows an electric vehicle 13, which comprises an electric drive system 14 with an electric machine 15 coupled to the gear input of a gearbox 1, which is designed as outlined above. In particular, one of the housing parts 3a...4b may also form a housing of the electric machine 15 or can be coupled thereto. The electric machine 15 is mechanically coupled to wheels 16 of the electric vehicle 13 by means of the gearbox 1 and side shafts or axles 17. The electric machine 15 may be provided for driving the electric vehicle 13 permanently in a pure electric car or intermittently, e.g. in combination with a combustion engine in a hybrid car.

It is noted that the invention is not limited to the embodiments disclosed hereinbefore, but combinations of the different variants are possible. In reality, the gearbox 1, 1a and the electric vehicle 13 may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of Reference Numerals

- 1, 1a: gearbox
- 2a, 2b: housing
- 3a..3q: first housing part
- 4a, 4b: second housing part
- 5,6: bearing
- 7: shaft
- 8, 9: gear wheel
- 10, 11: connection surface
- 12: tab
- 13: electric vehicle
- 14: electric drive system
- 15: electric machine
- 16: wheel
- 17: side shaft
- B: position of shaft
- M1, M2: mating surface
- P: matching pair
- S: separating plane of housing

## Claims

1. Gearbox (1, 1a), comprising
- a housing (2a, 2b) with at least a first housing part (3a..3q) and a second housing part (4a, 4b) connected with each other,
- a plurality of bearings (5, 6) arranged in said housing (2a, 2b),
- a plurality of shafts (7) supported in said bearings (5, 6) and
- a plurality of engaged gear wheels (8, 9) mounted on or being part of said shafts (7),
**characterized in that**
- the first housing part (3a..3q) and the second housing part (4a, 4b) are aligned to each other by means of a plurality of pairwise mating surfaces (M1, M2) forming matching pairs (P), wherein a first surface (M1) of the surfaces (M1, M2) of each matching pair (P) is arranged on or in the first housing part (3a..3q) and a second surface (M2) of the surfaces (M1, M2) of each matching pair (P) is arranged on or in the second housing part (4a, 4b) and wherein the mating surfaces (M1, M2) of a matching pair (P) are flat or curved.

2. Gearbox (1, 1a) as claimed in claim 1, **characterized in that** each of the shafts (7) is supported by at least two bearings (5, 6), wherein a first bearing (5) of said bearings (5, 6) of each shaft (7) is arranged in the first housing part (3a..3q) and a second bearing (6) of said bearings (5, 6) of each shaft (7) is arranged in the second housing part (4a, 4b).

3. Gearbox (1, 1a) as claimed in claim 1 or 2, **characterized in that** the surfaces (M1, M2) of at least one matching pair (P) are oriented perpendicularly to a separating plane (S) of the housing (2a, 2b), which is arranged between the first housing part (3a..3q) and the second housing part (4a, 4b).

4. Gearbox (1, 1a) as claimed in any one of claims 1 to 3, **characterized in** at least four matching pairs (P) with flat mating surfaces (M1, M2), wherein the mating surfaces (M1, M2) of a first and a second of the matching pairs (P) are arranged transversely to the mating surfaces (M1, M2) of a third and a fourth of the matching pairs (P).

5. Gearbox (1, 1a) as claimed in any one of claims 1 to 4, **characterized in that** it comprises at least two matching pairs (P) with curved mating surfaces.

6. Gearbox (1, 1a) as claimed in any one of claims 1 to 4, **characterized in that** it comprises at least one matching pair (P) with curved mating surfaces (M1, M2) and at least one matching pair (P) with flat mating surfaces (M1, M2).

7. Gearbox (1, 1a) as claimed in any one of claims 1 to 4, **characterized in that** the mating surfaces (M1, M2) of all matching pairs (P) are flat.

8. Gearbox (1, 1a) as claimed in any one of claims 1 to 3 or 5, **characterized in that** the mating surfaces (M1, M2) of all matching pairs (P) are curved.

9. Gearbox (1, 1a) as claimed in any one of claims 1 to 8, **characterized in that** the first housing part (3a..3q) and/or the second housing part (4a, 4b) comprises at least one tab (12), which reaches over a separating plane (S) of the housing (2a, 2b) and which comprises a first surface (M1) of a matching pair (P).

10. Gearbox (1, 1a) as claimed in any one of claims 1 to 9, **characterized in that** the mating surfaces (M1, M2) of at least one matching pair (P) are arranged inside of the housing (2a, 2b) or outside of the housing (2a, 2b).

11. Gearbox (1, 1a) as claimed in any one of claims 1 to 10, **characterized in that** the first housing part (3a..3q) and the second housing part (4a, 4b) are polygonal in a separating plane (S) of the housing (2a, 2b) and at least one matching pair (P) is located in a corner of the polygon or in a region of a corner of the polygon.

12. Drive system (14), **characterized by** a gearbox (1, 1a) according to any one of claims 1 to 11 and an electric machine (15) coupled to a gear input of the gearbox (1, 1a).

13. Drive system (14) as claimed in claim 12, **characterized in that** one of the housing parts (3a..3q, 4a, 4b) forms a housing of the electric machine (15) or is coupled thereto.

14. Vehicle (13) having at least two axles (17), at least one of which is driven, **characterized in that** said drive is provided at least partially or intermittently by the drive system (14) according to claim 12 or 13.
